# FASCICULE DE BREVET EUROPEEN

(11) **EP 0 432 094 B1**
(45) Date de publication et mention de la délivrance du brevet: **08.12.1993**
(21) Numéro de dépôt: 90810904.4
(22) Date de dépôt: 22.11.1990
(51) Int. Cl.: B30B 15/28, B21D 55/00, F16P 7/02

(54) **Procédé de contrôle de la chaine de commande d'une presse hydraulique**
Verfahren zur Steuerung der Bahn eines Stanzwerkzeugs
Process for controlling the operation of a hydraulic press

(30) Priorité: 22.11.1989 CH 4193/89
(43) Date de publication de la demande: 12.06.1991
(73) Titulaire: CYBELEC S.A., CH-1400 Yverdon-les-Bains (CH)
(72) Inventeur: Gallandre, Jean-Pierre, CH-1164 Buchillon (CH)
(74) Mandataire: Hranitzky, Wilhelm Max

(56) Documents cités:
- EP-A- 0 318 366
- US-A- 4 048 886
- US-A- 4 161 649
- US-A- 4 676 421
- PATENT ABSTRACTS OF JAPAN, vol. 7, no. 153 (M-226)[1298], 5 juillet 1983; & JP-A-58 61 999 (AIDA ENGINEERING K.K.) 13-04-1983

## Description

La présente invention concerne un procédé de contrôle de la chaine de commande d'une presse, telle qu'une presse plieuse hydraulique, selon le préambule de la revendication 1.

Divers procédés et dispositifs de sécurité ont été développés et mis au point, de façon à interrompre le mouvement de la machine lorsque, d'une part, une main ou un objet vient s'intercaler entre l'outil en mouvement et la pièce à travailler et, d'autre part, lorsque le passage du mouvement du coulisseau d'une grande vitesse à une vitesse réduite n'a pas été effectuée au-delà d'un point donné à proximité de la pièce à travailler. Il a été proposé plus particulièrement de contrôler l'opération de freinage en déclenchant un freinage à un angle prédéterminé du cycle de la machine, et en déterminant le temps de freinage ou l'angle de freinage de la machine. De tels dispositifs de contrôle ont été proposés pour des machines entraînées par un arbre rotatif dans lesquelles des moyens de détection de la position étaient couplés avec cet arbre pour fournir une indication de la position angulaire de l'arbre.

Un tel agencement n'est pas utilisable pour des dispositifs d'entraînement hydrauliques dans lesquels un coulisseau est entraîné par un ou deux vérins, étant donné qu'il ne fournit qu'un contrôle indirect du mouvement du coulisseau et, par ailleurs, ne permet pas le contrôle de certaines caractéristiques importantes de presses hydrauliques tel qu'expliqué plus loin.

L'invention a ainsi pour but de fournir un procédé de contrôle de la chaine de commande d'une presse plieuse hydraulique, basé sur une détection directe du mouvement du coulisseau. Plus particulièrement, l'invention vise le contrôle de l'état du dispositif d'entraînement hydraulique ou de chaque dispositif d'entraînement hydraulique utilisé dans la machine en vue, notamment, de détecter une éventuelle fuite d'un tel dispositif.

Par ailleurs, l'invention vise à fournir un procédé permettant de détecter des défauts de symétrie dans le cas de deux dispositifs d'entraînement disposés des deux côtés du tablier, défauts pouvant résulter, par exemple, d'une fuite excessive ou d'un autre défaut dans l'un de ces dispositifs.

A cet effet, le procédé selon l'invention comprend les mesures décrites dans la partie caractéristique des revendications 1 à 3.

L'invention sera mieux comprise à l'aide de la description qui suit, d'un exemple de réalisation se référant au dessin annexé dans lequel:

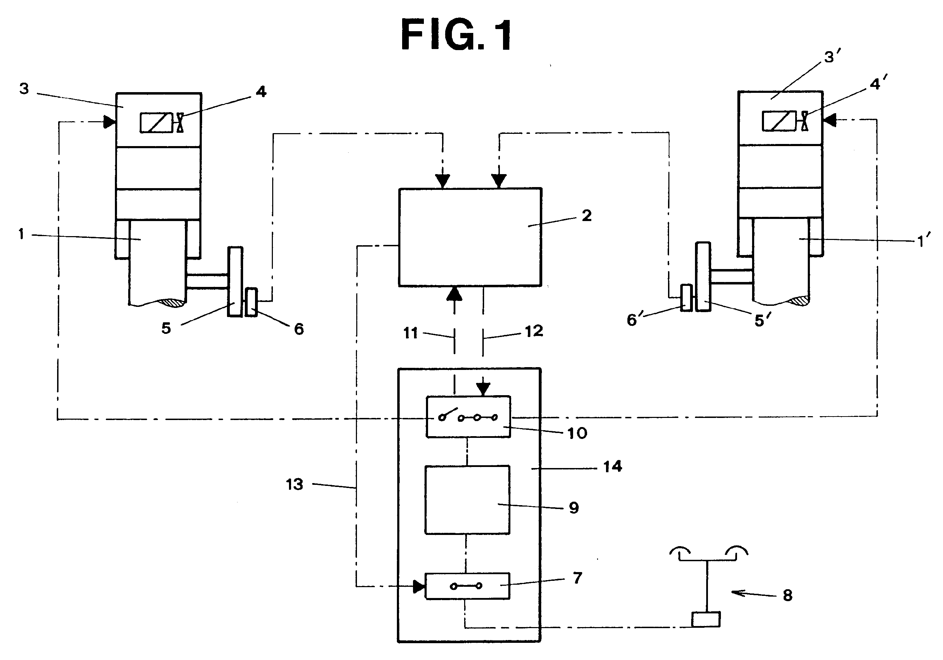

la Fig. 1 représente un schéma-bloc du fonctionnement d'un dispositif pour la mise en oeuvre du procédé de contrôle selon l'invention.

Le schéma 1 représente un dispositif de mise en oeuvre du présent procédé pour une presse plieuse comportant deux vérins 1, 1' pour l'entraînement du coulisseau, connectés à un dispositif de commande numérique 2 destiné à la commande automatique du travail de la presse. Chacun des vérins comporte un bloc hydraulique 3, 3' comportant une ou plusieurs valves 4, 4' de commande, dont le mouvement d'ouverture/fermeture est commandé par le dispositif 2. Chacun des vérins est, en outre, solidaire d'une règle de mesure 5, 5' disposée de façon à se déplacer verticalement en face d'une tête de mesure fixe correspondante 6, 6'. Chaque tête de mesure est connectée électriquement au dispositif de commande 2 et délivre un signal de position fournissant une information précise quant au mouvement relatif de chaque règle de mesure par rapport à la tête de mesure associée. Dans la pratique, les elements 5, 6 et 5', 6' peuvent être constitués par des transducteurs optiques linéaires.

Les signaux de position sont traités dans le dispositif de commande numérique 2, comme décrit ci-après. Les moyens de commande de la presse plieuse comportent, en outre, un relais de contrôle d'arrêt 7 connecté au dispositif de commande 2, ainsi qu'à un poste de commande manuel 8, tel qu'un poste usuel à deux mains. Un dispositif de contrôle 9 pour le poste de commande manuel 8 et un relais de contrôle 10 connecté au dispositif de commande numérique 2 font également partie des moyens de commande logés dans une armoire de commande 14. Le relais de contrôle 10 est, en outre, connecté aux blocs hydrauliques 3 et 3' pour commander le fonctionnement des valves 4, 4'.

Lors du fonctionnement de la presse plieuse, lorsque le poste de commande manuel 8 délivre un ordre de descente du coulisseau 15, un signal correspondant est transmis par l'intermédiaire du relais de contrôle 10 au dispositif de commande numérique 2, ce qui est illustré par la ligne interrompue 11. Le dispositif de commande 2 délivre, en retour, au relais de contrôle 10, un signal d'autorisation, ce qui est illustré par la ligne interrompue 12. Le relais de contrôle actionne alors les valves 4 et 4' pour effectuer la descente du coulisseau 15.

Pour effectuer une opération de contrôle avant une période de travail effectif de la machine, l'on initialise d'abord les moyens de commande, de sorte que les transducteurs 5, 6 et 5', 6' fournissent une information de position absolue. Le contrôle de la capacité de freinage de la presse est effectué en produisant un signal d'arrêt, lorsque le coulisseau s'est déplacé sur une distance prédéterminée et a atteint une vitesse correspondante. Le signal d'arrêt est délivré par le dispositif de commande numérique 2, par l'intermédiaire de la connection 13 au relais 7 pour désactiver le poste de commande manuel 8 et pour actionner les valves 4, 4' par l'intermédiaire du relais 10, de manière à amener le coulisseau à l'arrêt. Le dispositif de commande numérique 2 traite les signaux d'information de position reçus des têtes de mesure 6, 6' pour déterminer et comparer, avec des valeurs de référence prédéterminées, la distance de freinage et le temps de freinage pour chacun des dispositifs d'entraînement 1, 1'.

Lorsque l'une des valeurs de référence est dépassée, un signal de défaut correspondant est émis et peut produire, par exemple, un signal d'alarme acoustique, un affichage optique et/ou un signal de blocage pour empêcher une opération de travail de la presse.

Le contrôle du fonctionnement du dispositif d'entraînement comprend la détection d'une éventuelle fuite anormale dans le système hydraulique de la presse. Ceci est effectué par le contrôle d'un éventuel mouvement du coulisseau, une fois que celui-ci est pratiquement arrivé à l'arrêt dans une position intermédiaire, telle que la position atteinte après le contrôle du fonctionnement du freinage décrit ci-dessus. Des valeurs de référence pour la distance et le temps d'un tel mouvement du coulisseau à partir de sa position d'arrêt ou d'une position dans laquelle le coulisseau n'a qu'une très faible vitesse résiduelle due à une fuite normale, sont mémorisées dans le dispositif de commande 2 et sont comparées avec les valeurs mesurées correspondantes. Si ces valeurs prédéterminées sont dépassées, des signaux de défaut respectifs sont engendrés pour indiquer une fuite excessive dans les dispositifs d'entraînement de chaque côté du coulisseau.

Il est à noter que le procédé de contrôle selon l'invention permet d'obtenir une information sélective quant au bon fonctionnement de l'ensemble de la chaine de commande et d'entraînement de la presse et, par conséquent, permet de déceler des défauts dans les dispositifs mécaniques, électriques, électroniques et hydrauliques qui font partie de cette chaine de commande et d'entraînement.

## Revendications

1. Procédé de contrôle de la chaîne de commande d'une presse plieuse ou d'une machine analogue, comportant un coulisseau (15) déplaçable au moyen d'au moins un dispositif d'entraînement (1) relié à un dispositif de commande (2), et comportant des moyens de détection de la position et de la vitesse d'au moins un élément mobile de la machine, procédé selon lequel on délivre, au cours d'un déplacement du coulisseau, un ordre d'interruption de ce mouvement, l'on compare le temps ou la distance d'arrêt avec des valeurs de référence, et l'on produit un signal de défaut, lorsque l'une au moins de ces valeurs est dépassée, caractérisé en ce que, dans une machine dans laquelle le dispositif d'entraînement est un dispositif hydraulique comportant au moins un vérin et lesdits moyens de détection sont couplés avec ce vérin, l'on mesure le déplacement du coulisseau dans un temps ou sur une distance donnés à partir d'une position d'arrêt du coulisseau dans laquelle la vitesse du coulisseau est nulle ou extrêmement faible, de manière à déterminer d'éventuelles fuites importantes du dispositif hydraulique d'entraînement.

2. Procédé selon la revendication 1, caractérisé en ce que, pour une machine comportant un dispositif d'entraînement à deux vérins disposés sur les côtés du coulisseau et des moyens de détection couplés avec chacun de ces vérins, l'on compare, de façon indépendante, la distance ou le temps d'arrêt de chacun des vérins avec des valeurs de référence, et l'on produit un signal lorsque l'une au moins de ces valeurs est dépassée.

3. Procédé de contrôle de la chaîne de commande d'une presse plieuse ou d'une machine analogue, comportant un coulisseau (15) déplaçable au moyen d'au moins un dispositif d'entraînement (1) relié à un dispositif de commande (2), et comportant des moyens de détection de la position et de la vitesse d'au moins un élément mobile de la machine, procédé selon lequel on délivre, au cours d'un déplacement du coulisseau, un ordre d'interruption de ce mouvement, l'on compare le temps ou la distance d'arrêt avec des valeurs de référence, et l'on produit un signal de défaut, lorsque l'une au moins de ces valeurs est dépassée, caractérisé en ce que, dans une machine dans laquelle le dispositif d'entraînement est un dispositif hydraulique comportant deux vérins disposés sur les côtés du coulisseau et des moyens de détection couplés avec chacun de ces vérins, l'on compare, de façon indépendante, la distance ou le temps d'arrêt de chacun des vérins avec des valeurs de référence, et l'on produit un signal lorsque l'une au moins de ces valeurs est dépassée.

## Patentansprüche

1. Steuerverfahren für die Befehlskette einer Biegepresse oder einer analogen Maschine, mit einem Stempel (15), der mit Hilfe wenigstens einer Antriebseinrichtung (1) verschiebbar ist, welche an eine Steuereinrichtung (2) angeschlossen ist, und mit Ermittlungseinrichtungen für die Lage und die Geschwindigkeit wenigstens eines beweglichen Maschinenelementes, bei welchem Verfahren man im Verlaufe einer Verschiebung des Stempels einen Unterbrechungsbefehl für diese Bewegung abgibt, man die Zeit oder den Anhalteweg mit Referenzwerten vergleicht und man ein Fehlersignal erzeugt, wenn mindestens einer dieser Werte überschritten wird, dadurch gekennzeichnet, daß man an einer Maschine, in welcher die Antriebseinrichtung eine hydraulische Einrichtung mit zumindest einem Kolben ist und die Ermittlungseinrichtungen an den Kolben angekoppelt sind, die Verschiebung des Stempels in einer Zeit oder über eine Entfernung mißt, welche ausgehend von einer Haltelage des Stempels gegeben sind, in welcher die Geschwindigkeit des Stempels null beträgt oder extrem gering ist, um so etwaige wesentliche Leckagen der hydraulischen Antriebseinrichtung festzustellen.

2. Verfahren nach Anspruch 1, dadurch gekennzeichnet, daß man für eine Maschine mit einer Antriebseinrichtung mit zwei Kolben, die an den Seiten des Stempels angeordnet sind, und Ermittlungseinrichtungen, die an jeden dieser Kolben angekoppelt sind, unabhängig voneinander den Anhalteweg oder die -zeit jedes der Kolben mit Referenzwerten vergleicht, und daß man ein Signal erzeugt, sobald wenigstens einer dieser Werte überschritten wird.

3. Steuerverfahren für die Befehlskette einer Biegepresse oder einer analogen Maschine, mit einem Stempel (15), der mit Hilfe wenigstens einer Antriebseinrichtung (1) verschiebbar ist, welche an eine Steuereinrichtung (2) angeschlossen ist, und mit Ermittlungseinrichtungen für die Lage und die Geschwindigkeit wenigstens eines beweglichen Maschinenelementes, bei welchem Verfahren man im Verlaufe einer Verschiebung des Stempels einen Unterbrechungsbefehl für diese Bewegung abgibt, man die Zeit oder den Anhalteweg mit Referenzwerten vergleicht und man ein Fehlersignal erzeugt, wenn mindestens einer dieser Werte überschritten wird, dadurch gekennzeichnet, daß man an einer Maschine, in welcher die Antriebseinrichtung eine hydraulische Einrichtung mit zwei an den Seiten des Stempels angeordneten Kolben ist und die Ermittlungseinrichtungen an jeden dieser Kolben angekoppelt sind, man unabhängig voneinander den Anhalteweg oder die -zeit jedes der Kolben mit Referenzwerten vergleicht und man ein Signal erzeugt, sobald mindestens einer dieser Werte überschritten wird.

## Claims

1. A method for checking the control system of a forming press or of a similar machine, comprising a slide (15) movable by means of at least one driving device (1) connected to a control device (2) and comprising position and speed detection means for at least one mobile member of the machine, method according to which an order is delivered during the movement of the slide to interrupt this movement, the time or the distance to stoppage is compared with reference values, and a defect signal is produced when at least one of these values is exceeded, characterized in that in a machine in which the driving device is a hydraulic device comprising at least one jack and said detection means are coupled with this jack, the displacement of the slide is measured over a given duration or distance from a position of standstill of the slide in which the speed of the slide is nil or extremely low, in such a manner as to detect any important leaks which may have occurred in the hydraulic driving device.

2. A method according to claim 1, characterized in that, in a machine including a driving device with two jacks arranged on the sides of the slide and detection means coupled with each one of these jacks, the distance or the time to standstill of each one of the jacks is compared independently with reference values, and a signal is produced when at least one of these values is exceeded.

3. A method for checking the control system of a forming press or of a similar machine, including a slide (15) movable by means of at least one driving device (1) connected to a control device (2) and including detection means for the position and the speed of at least one movable member of the machine, method according to which an order to interrupt this motion is delivered during a displacement of the slide, the stoppage time or distance is compared with reference values and a defect signal is produced when at least one of these values is exceeded, characterized in that in a machine in which the driving device is a hydraulic device comprising two jacks disposed on the sides of the slide and detection means coupled with each one of these jacks, the stoppage distance or time of each one of the jacks is compared independently with reference values and a signal is produced when at least one of these values is exceeded.
